# EUROPEAN PATENT SPECIFICATION

(11) **EP 1 763 201 B1**
(45) Date of publication and mention of the grant of the patent: **15.04.2009**
(21) Application number: 06019014.7
(22) Date of filing: 12.09.2006
(51) Int. Cl.: H04L 29/08

(54) **Apparatus and method for data relay**
Vorrichtung und Verfahren zur Weiterleitung von Daten
Dispositif et procédé pour retransmettre des données

(30) Priority: 13.09.2005 JP 2005265466
(43) Date of publication of application: 14.03.2007
(73) Proprietor: NTT DoCoMo, Inc., Chiyoda-ku Tokyo 100-6150 (JP)
(72) Inventor: Yamamoto, Kazunori Int.Prop.Dep. NTT DoCoMo, Inc., Tokyo 100-6150 (JP); Suzuki, Hideharu Int.Prop.Dep. NTT DoCoMo, Inc., Tokyo 100-6150 (JP)
(74) Representative: Verhasselt, Jörn

(56) References cited:
- EP-A2- 1 175 051
- SHIKAMA T ET AL: "Resequencing Schemes for Selective-Repeat ARQ and Their Performance" ADVANCED INFORMATION NETWORKING AND APPLICATIONS, 2005. AINA 2005. 19TH INTERNATIONAL CONFERENCE ON TAIPEI, TAIWAN 25-30 MARCH 2005, PISCATAWAY, NJ, USA,IEEE, 25 March 2005 (2005-03-25), pages 491-494, XP010790051 ISBN: 0-7695-2249-1

## Description

The present invention relates to a data relay apparatus and a data relay method for controlling relaying of data when data is retransmitted.

When data is transferred with the use of a transmission line with a high probability of occurrence of an error, such as a wireless line, it is common to perform error detection, retransmission (ARQ: Automatic Repeat reQuest) and control of order of data units (in-order delivery) in the data link layer, which is a lower layer (see 3GPP TS 25.322 V5.0.0.0 (2002-03), 3rd Generation Partnership Project; Technical Specification Group Radio Access Network; Radio Link Control (RLC) Protocol Specification (Release 5), for example). Therefore, even if a transmission error occurs, the upper layers cannot see loss of a data unit or change of order of data units. However, if retransmission is performed in the data link layer, data units arriving after the data unit determined to be retransmitted are stopped once, and the data units are transmitted in accordance with a correct order after the retransmitted data unit arrives. Therefore, wide fluctuation (jitter) of the interval of arrival of data units is caused.

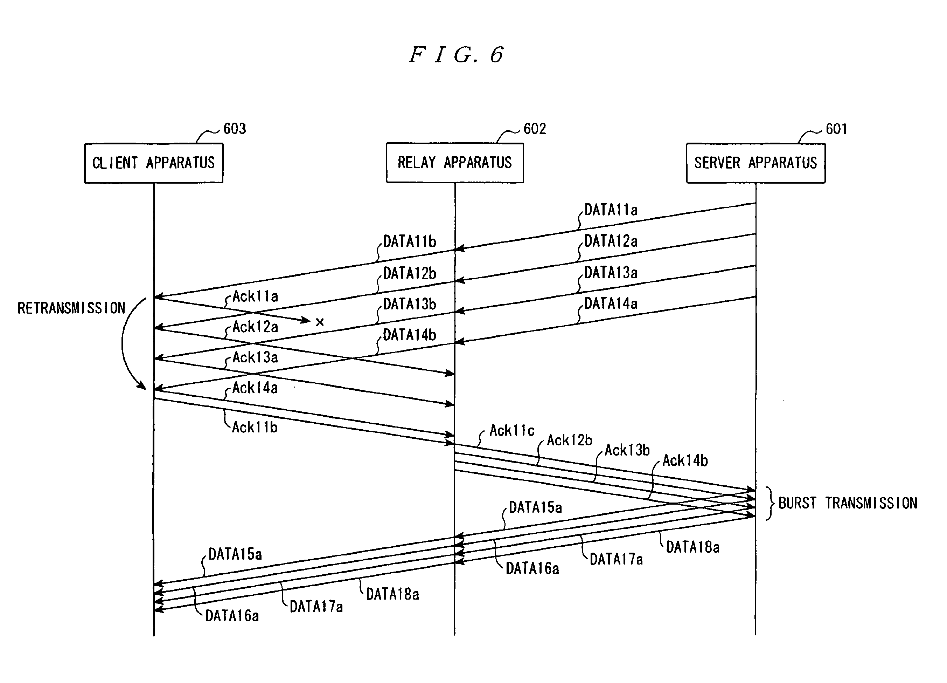

FIG. 6 is a sequence diagram for illustrating the retransmission function and the order assurance function of a conventional communication network. As data units transmitted and received on this communication network, there exist data transmitted by a server apparatus 601 (user data) and Ack (Acknowledgement: a delivery-acknowledging message) transmitted from a client apparatus 603 to notify that the data has normally arrived.

In FIG. 6, the server apparatus 601 transmits data 11 a, data 12a, data 13a and data 14a, and these data units are received by the client apparatus 603 via a relay apparatus 602.

The client apparatus 603 transmits Ack to the server apparatus 601 in response to each of the received data unit. Here, an example is shown where Ack 11 a in response to data 11 b is lost. In order to keep the order of Acks, the relay apparatus 602 does not immediately transmit Ack 12a, Ack 13a and Ack 14a which have already arrived but waits for arrival of the Ack 11 b retransmitted by the client apparatus 603. Then, it transmits Ack 11 c, Ack 12b, Ack 13b and Ack 14b to the server apparatus 601 in accordance with the correct order.

When the Ack 11 b arrives, the four Acks, the Ack 11 c, the Ack 12b, the Ack 13b and the Ack 14b in the correct order are transmittable, and therefore, the relay apparatus 602 transmits the four Acks to the server apparatus 601 in the shortest time without an interval among them.

Because the server apparatus 601 controls the amount of data to be transmitted with a sliding window, it can transmit one data unit each time it receives Ack in the correct order beginning with the oldest Ack 11 c. Consequently, the server apparatus 601 transmits data unit at an interval corresponding to the interval of receiving the Acks. Therefore, when the Ack 11c, the Ack 12b, the Ack 13b and the Ack 14b are received collectively from the relay apparatus 602, data 15a, data 16a, data 17a and data 18a are transmitted in a burst-like manner (concentrated during a particular time).

Thus, in the data link layer having the retransmission function and the order assurance function, when loss of a data unit occurs due to an error or the like, data units which arrive after the lost data unit are accumulated once, the lost data unit is retransmitted, and then the data units are transmitted to the upper layer protocol in a correct order. Therefore, when seen from the upper layer protocol, arrival of data units stops for a while, and then multiple data units arrive collectively. In the case of using TCP/IP (Transmission Control Protocol/Internet Protocol) as the upper layer protocol, if an error does not occur in the data link layer, and there is not fluctuation of delay, then Ack clocking works in which data is transmitted by the transmission side in response to Ack returned by the receiving side, and the communication speed of the network and the data transmission speed of the transmission side can be synchronized with each other. Thereby, the probability of loss of a data unit is lowered.

However, if Ack returned by the receiving side is lost in the data link layer, the data link layer accumulates Acks which arrive after the lost Ack once. Then, after the lost Ack is retransmitted and arrives, the Ack is handed to the TCP layer together with the accumulated Acks. The TCP layer sends out the data into the network in synchronization with receiving of Ack. However, if multiple Acks arrive in a short time, the Ack clocking for adjusting the transmission speed of data units to the speed of the network does not work any more, and data is sent out into the network at an excessive speed. As a result, overflow of queues in a router in the network occurs, and the probability of occurrence of loss of a data unit is increased.

Examination is being made on a technique for realizing reduction of transmission delay time and the number of buffers and reducing burst of output of packets (see JP2004-147182A, for example). In the technique described in JP2004-147182A, control is performed so that the order of received packets is assured when the number of received packets which have been caused to wait for order control by retransmission processing is a predetermined number or less, and when the number of the received packets which have been caused to wait for order control by retransmission processing exceeds the predetermined number, the received packets are outputted prior to the retransmitted packet.

However, in the technology described in JP2004-147182A, since received packets are accumulated until a specified amount is exceeded, there is a possibility that a lot of received packets may be accumulated and burst transmission may be caused, depending on how the specified amount is set. Furthermore, if there is not space enough to store the specified amount of data in the queues of a router on the communication path, data may be lost.

Furthermore, though a trouble does not occur even if the order of arrival is not assured, in the case where the type of a data unit is feedback data such as Ack, a trouble may occur depending on the type of a data unit. Therefore, it is not possible to disable the order assurance function without exception.

Known from EP 1 175 051 A2 is a data relay apparatus and a data relay method according to the preamble of claims 1 and 5, respectively.

Due to the order assurance function the transmission is such that if retransmission of a data unit of a particular type occurs, it is performed to accumulate subsequent data units of the particular type till arrival of the retransmitted data.

The present invention has been made to solve the above problems, and its object is to provide a data relay apparatus and a data relay method where the effect of preventing burst traffic is further enlarged, in consideration of the type of data units.

A data relay apparatus for relaying sending/receiving of a data unit in accordance with a communication protocol having an order assurance function is provided, the apparatus comprising: type determination means for determining the type of a data unit; order determination means for determining whether or not the arrival order of a data unit is correct; and order assurance function control means for disabling the order assurance function; wherein if it is determined that the arrival order of a data unit of a particular type is not correct, based on the result of determination by the order determination means and the type determination means, the order assurance function control means disables the order assurance function for the data unit of the particular type.

According thereto, if it is determined that the arrival order of a data unit of a particular type is not correct, the data relay apparatus disables the order assurance function for the data unit of the particular type. Thereby, even if retransmission of the data unit of the particular type occurs, accumulation of subsequent data units of the particular type till arrival of the retransmitted data unit is not performed. Thus, it is possible to avoid a trouble in consideration of the type of data units and prevent data units from being sent out to a communication network in a burst-like manner.

Additionally, the data unit of the particular type may be a delivery-acknowledging message.

According thereto, it is possible to prevent data units from being sent out to a communication network in a burs-like manner by disabling the order assurance function only for delivery-acknowledging messages for which a trouble does not occur even if the order assurance function is disabled.

Additionally, the data unit of the particular type may be an upward data unit; and communication is performed on the communication network in accordance with a communication protocol in which the interval of sending downward data units is related to the interval of receiving of upward data units.

According thereto, it is possible to prevent downward data from being sent out in a burst-like manner and prevent loss of data by disabling the order assurance function when the arrival order of an upward data unit is determined not to be correct.

Additionally, the order assurance function control means may immediately transmit a data unit of a particular type the arrival order of which has been determined not to be correct, without accumulating the data unit.

According thereto, a particular type of data unit the arrival order of which is not correct is immediately transmitted without being accumulated. Thereby, it is possible to certainly prevent delay of a data unit and prevent data units from being sent out in a burst-like manner.

Further, a data relay method for relaying sending/receiving of a data unit on a communication network having an order assurance function is provided, the method comprising: an order determination step of determining whether or not the arrival order of a data unit is correct; and a type determination step of determining the type of a data unit; an order assurance function control step of, if it is determined by the order determination step that the arrival order of a data unit is not correct, and it is determined by the type determination step that the type of the data unit is a particular type, disabling the order assurance function for the data unit of the particular type.

According thereto, it is possible to prevent data units from being sent out to a communication network in a burst-like manner, similarly to the aforementioned data relay apparatus.

According to the present invention, if it is determined that the arrival order of a data unit of a particular type is not correct, the data relay apparatus disables the order assurance function for the data unit of the particular type. Thereby, even if retransmission of the data unit of the particular type occurs, accumulation of subsequent data units of the particular type till arrival of the retransmitted data unit is not performed. Thus, it is possible to avoid a trouble in consideration of the type of data units and prevent data units from being sent out to a communication network in a burst-like manner.

Further embodiments of the invention may be gathered from the following description.

The invention will now be explained in detail in connection with preferred embodiments as shown in the attached drawings.
FIG. 1 is a diagram showing the entire configuration of a communication network according to an embodiment of the present invention;
FIG. 2 is a diagram showing an example of the format of data units sent and received on the communication network according to the embodiment;
FIG. 3 is a diagram showing the functional blocks of a data relay apparatus according to the embodiment;
FIG. 4 is a flowchart of the processing performed by the data relay apparatus according to the embodiment;
FIG. 5 is a sequence diagram for illustrating an example of operation on the communication network according to the embodiment; and
FIG. 6 is a sequence diagram for illustrating the retransmission function and the order assurance function of a conventional communication network.

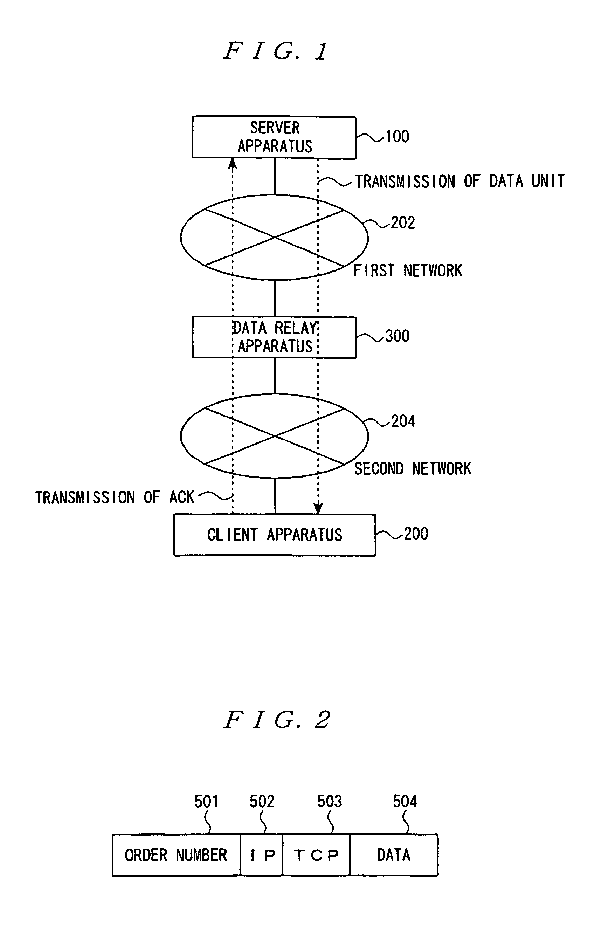

FIG. 1 is a diagram showing an example of the entire configuration of a communication network according to an embodiment of the present invention.

This communication network is configured to include a server apparatus 100, a first network 202, a data relay apparatus 300, a second network 204 and a client apparatus 200.

The server apparatus 100 and the data relay apparatus 300 are connected via the first network 202 positioned on the upstream side. The data relay apparatus 300 and the client apparatus 200 are connected via the second network 204 positioned on the downstream side. The second network 204 has an order assurance function and a retransmission function for data units sent and received in the data link layer which is a lower layer.

The server apparatus 100 transmits a data unit for carrying data, to the client apparatus 200 via the data relay apparatus 300.

The client apparatus 200 is, for example, a communication terminal such as a cellular phone and a personal computer, and it receives data from the server apparatus 100 and returns a data unit indicating Ack, which is a message acknowledging delivery of data, to the server apparatus 100 via the data relay apparatus 300.

The data relay apparatus 300 relays sending/receiving of a data unit between the two networks 202 and 204.

The networks have a function of performing communication in accordance with TCP/IP as an upper layer protocol. The TCP controls the communication speed by adopting a communication method referred to as Ack clocking in which the interval of transmission (transmission pace or transmission timing) of downward data units is synchronized with the interval of arrival of upward data units.

FIG. 2 is a diagram showing an example of the format of a data unit sent/received on this communication network. As shown in the figure, the data unit is configured by an order number 501, an IP header 502, a TCP header 503 and data 504.

The order number 501 is indicated by a number which is incremented by 1 every time a data unit is transmitted by a transmission-side apparatus. A receiving-side apparatus can determine whether data units could be received in accordance with a correct order (specifically, whether loss, overlap, change in the order of data units or the like has been caused) by checking the order numbers 501 of the data units.

The IP header 502 is an IP header in accordance with the TCP/IP protocol.

The TCP header 503 is a TCP header in accordance with the TCP/IP protocol. It is possible to determine whether or not the type of the data unit is Ack from information included in the TCP header 503.

Information carried by the data unit (user data) is stored as the data 504. (Functional configuration of the data relay apparatus)

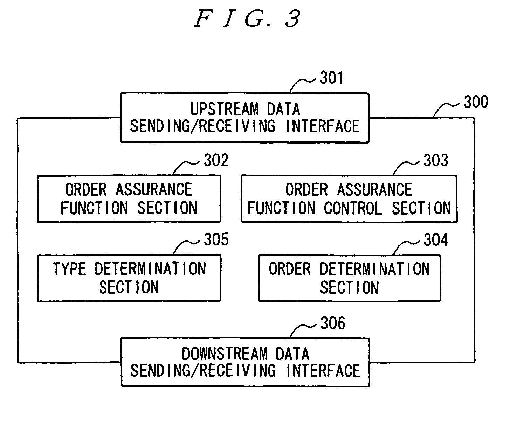

FIG. 3 is a diagram showing an example of the functional blocks of the data relay apparatus 300. As shown in the figure, the data relay apparatus 300 is configured to include an upstream data sending/receiving interface 301 and a downstream data sending/receiving interface 306 for controlling sending/receiving of data, an order assurance function section 302 for assuring the order of data units, an order determination section 304 for determining whether or not the arrival order of a data unit is correct, a type determination section 305 for determining the type of a data unit, and an order assurance function control section 303 for controlling the order assurance function section 302. These functional blocks are realized by hardware such as a CPU and software such as programs which are provided for the data relay apparatus 300.

Now, each of the functional blocks will be described in detail below.

The order assurance function section 302 transmits data units received by the downstream data sending/receiving interface 306, from the upstream data sending/receiving interface 301 in the same order in which the client apparatus 200 has transmitted the data units. Specifically, the order assurance function section 302 checks the order numbers 501 of the received data units, and, if it is detected that the arrival order is not correct due to loss of a data unit or the like, then the order assurance function section 302 instructs the client apparatus 200 to perform retransmission, and accumulates data units which have arrived after the lost data unit once. Then, when the lost data unit arrives, the order assurance function section 302 transmits the data units from the upstream data sending/receiving interface 301 in accordance with the order indicated by the order numbers 501.

The order determination section 304 determines whether or not the arrival order of data units is correct.

The type determination section 305 determines the type of a data unit. In this embodiment, it is determined whether or not the type of a data unit is a delivery-acknowledging message (Ack).

The order assurance function control section 303 has a function of disabling the order assurance function of the order assurance function section 302 for a data unit of a particular type. In this embodiment, if the arrival order of a data unit is not correct, and the type of the data unit is Ack, then the order assurance function control section 303 disables the order assurance function for the data unit and immediately transmits the data unit without accumulating it.

### (Flowchart)

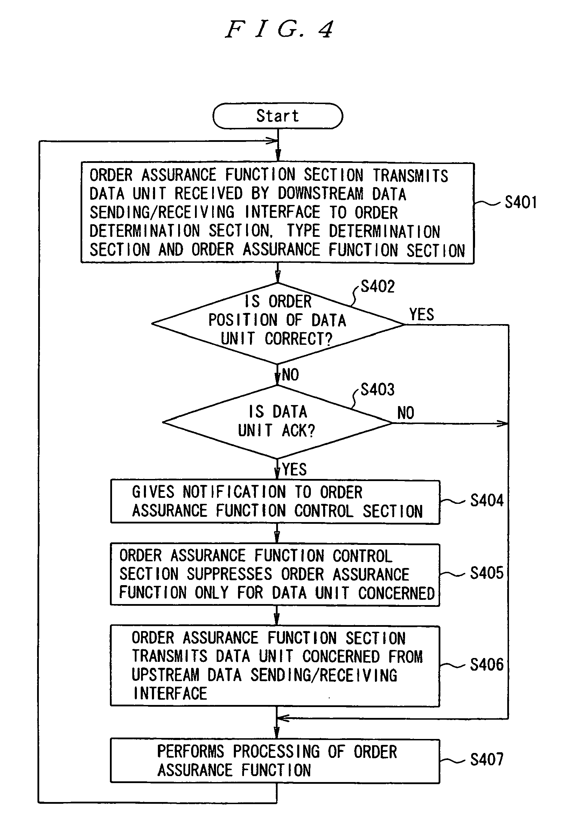

Next, the procedure for the processing performed by the data relay apparatus 300 will be described with reference to the flowchart shown in FIG. 4.

First, the order assurance function section 302 of the data relay apparatus 300 reads a data unit which has arrived at the downstream data sending/receiving interface 306 from the client apparatus 200 and transmits it to the order assurance function section 302, the order determination section 304 and the type determination section 305 (step S401).

The order determination section 304 determines whether or not the arrival order of the data unit is correct (step S402). If it is determined that the order position is correct (step S402: YES), then the process proceeds to the processing of the order assurance function at step S407.

On the other hand, if it is determined that the arrival order of the data unit is not correct (step S402: NO), then the type determination section 305 determines whether or not the type of the data unit is Ack (Step S403). If it is determined that the type is not Ack (step S403: NO), then the process proceeds to the processing of the order assurance function at step S407.

On the other hand, if it is determined that the type of the data unit is Ack (step S403: YES), then the type determination section 305 notifies the order assurance function control section 303 to that effect (step S404).

Receiving the notification, the order assurance function control section 303 suppresses (disables) the order assurance function when the data unit which has arrived in a wrong order and the type of which has been determined to be Ack (step S405), and immediately transmits the data unit from the upstream data sending/receiving interface 301 (Step S406).

Then, the processing of the order assurance function is performed (step S407), and the process returns to the initial processing.

As a result, Ack is relayed without delay, and thereby, the phenomenon that data units are transmitted by the server apparatus 100 in a burst-like manner can be improved.

### (Example of operation)

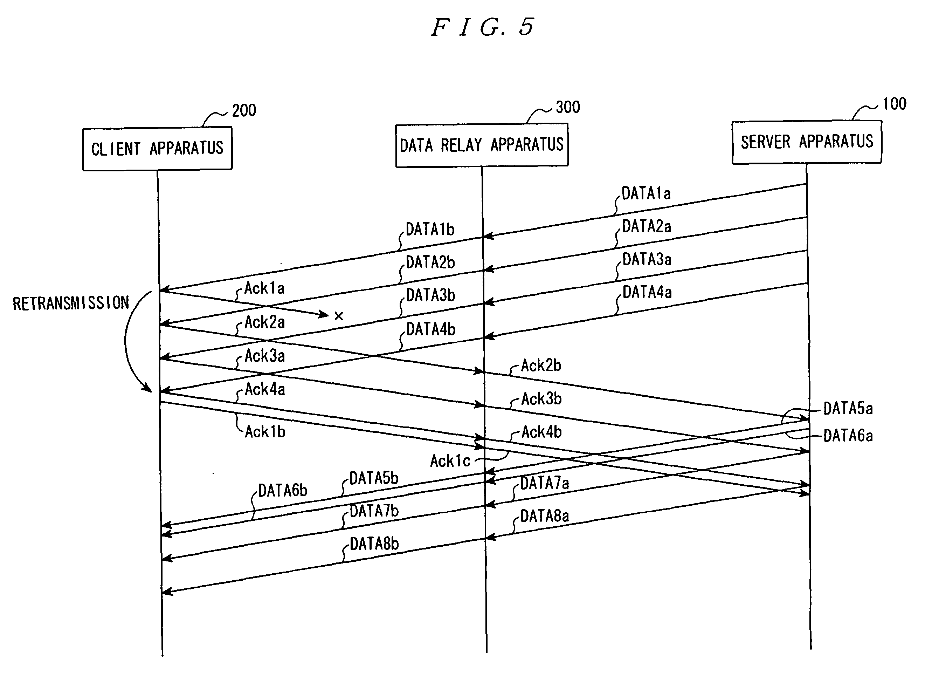

FIG. 5 is a sequence diagram for illustrating an example of operation on the communication network according to this embodiment.

First, the server apparatus 100 transmits data 1 a, data 2a, data 3a and data 4a. These data units are received by the client apparatus 200 as data 1 b, data 2b, data 3b and data 4b, respectively, via the data relay apparatus 300.

For each of the received data unit, the client apparatus 200 transmits Ack for acknowledging the receiving to the server apparatus 100. For example, Ack for the data 1 b is Ack 1 a.

When an error does not occur, the Ack 1 a is immediately relayed to the server apparatus 100 by the data relay apparatus 300 when it arrives at the data relay apparatus 300. Ack 2a, Ack 3a and Ack 4a following the Ack 1 a are also immediately relayed to the server apparatus 100 as Ack 2b, Ack 3b and Ack 4b when they arrive at the data relay apparatus 300. In this way, when receiving Ack, the server apparatus 100 immediately transmits the data unit. Thus, with the same interval at which the client apparatus 200 has transmitted each Ack, the server apparatus 100 transmits a data unit.

Next, description will be made in the case where an error occurs, and the Ack 1 a for the data 1b is lost. In this case, the data relay apparatus 300 immediately transmits the Ack 2a, the Ack 3a and the Ack 4a which have already arrived, to the server apparatus 100 as the Ack 2b, the Ack 3b and the Ack 4b without waiting for arrival of the retransmitted Ack 1b. Therefore, the server apparatus 100 can transmit data 5a, data 6a, data 7a and data 8a at an appropriate timing in accordance with the interval of arrival of the Acks, and it is possible to prevent data transmission from being performed in a burst-like manner.

The order of the processing for determining the order position of a data unit at step S402 and the processing for determining the type of the data unit at step S403 may be reversed.

As described above, the data relay apparatus 300 determines the type of a data unit, and, if it is determined that the arrival order of a data unit of a particular type is not correct, the data relay apparatus 300 disables the order assurance function for the data unit of the particular type. Thereby, even if retransmission of the data unit of the particular type occurs, it is not performed to accumulate subsequent data units of the particular type till arrival of the retransmitted data. Thus, it is possible to avoid a trouble caused by disabling the order assurance function in consideration of the type of data units and prevent data from being sent out to a communication network in a burst-like manner.

Especially, in the case of performing TCP communication, it is possible to avoid burst transmission which is caused when Ack sent from the client apparatus 200 is lost due to deterioration of wireless condition and the like, subsequent Acks are stopped by the order assurance function of the data relay apparatus 300, and then the Acks are sent from the data relay apparatus 300 to the server apparatus 100 at a time in a correct order after a retransmitted Ack arrives. When burst transmission occurs, and there is not space enough to store the data in the queues in a router on a communication path the data passes, a part of data transmitted by the server apparatus 100 is lost, and decrease of the communication speed is caused. By performing communication control by the data relay apparatus 300, such troubles can be prevented. The effect of preventing such burst transmission can be obtained in both of the upward and downward directions.

Especially, due to that burst traffic can be prevented in the downward direction, it is possible to prevent loss of data which may be caused when traffic flows from a high-speed line into a low-speed line. Furthermore, occurrence of a line speed higher than an assumed speed is prevented, and involvement of the bands of other flows on the same line is prevented. Thereby, loss of a packet in other flows can be prevented.

In the embodiment described above, description has been made on Ack in the case of TCP as an example of the type of data unit for which the order assurance function is to be disabled. However, the type is not limited thereto, and Ack in the case of PGMCC is also possible.

The type of data unit for which the order assurance function is disabled is not limited to feedback data such as Ack, and any such data unit is possible that a trouble does not occur even if the order is not assured. For example, a data unit for notifying the communication condition may be possible. Also, the condition for determining the type of data unit is not limited to whether the data unit is Ack or not. For example, it is possible that whether the direction is upward or downward is determined, and, in the case of an upward data unit, the data unit is determined to be a data unit for which the order assurance function is disabled.

In the embodiment described above, it has been described that, if the order assurance function is disabled, a data unit which has been determined the order position of which is not correct is immediately transmitted. However, the timing of transmitting the data unit the order position of which is not correct is not limited thereto. Any timing is possible only if it is before receiving a retransmitted data unit. However, in the case of immediate transmission, the effect of preventing burst traffic is larger.

In the embodiment described above, it has been described that only the second network 204 has the retransmission function and the order assurance function in the data link layer. However, this is not limiting. It is also possible that only the first network 202 has the retransmission function and the order assurance function. Alternatively, both of the first network 202 and the second network 204 may have the retransmission function and the order assurance function. Also, in the embodiment described above, it has been described that the retransmission function and the order assurance function are provided for a lower layer. However, this is not limiting. A communication protocol is also possible in which the retransmission function and the order assurance function are provided for an upper layer.

It is possible to prevent data units from being sent out in a burst-like manner in a communication network having the order assurance function.

## Claims

1. A data relay apparatus (300) for relaying sending/receiving of a data unit in accordance with a communication protocol having an order assurance function, the apparatus (300) comprising:
type determination means (305) for determining the type of a data unit; and
order determination means (304) for determining whether or not the arrival order of a data unit is correct or not;
**characterized by**
order assurance function control means (303) for disabling the order assurance function; wherein
if it is determined that the arrival order of a data unit of a particular type is not correct, based on the result of determination by the order determination means (304) and the type determination means (305), the order assurance function control means (303) disables the order assurance function for the data unit of the particular type.

2. The data relay apparatus (300) according to claim 1, wherein the data unit of the particular type is a delivery-acknowledging message.

3. The data relay apparatus (300) according to claim 1 or 2, wherein the data unit of the particular type is an upward data unit; and communication is performed on the communication network in accordance with a communication protocol in which the interval of sending downward data units is synchronized with the interval of arrival of upward data units.

4. The data relay apparatus (300) according to any one of claims 1 to 3, wherein
the order assurance function control means (303) immediately transmits a data unit of a particular type the arrival order of which is not correct, without accumulating the data unit.

5. A data relay method for relaying sending/receiving of a data unit in accordance with a communication protocol having an order assurance function, the method comprising:
an order determination step (S402) of determining whether or not the arrival order of a data unit is correct or not; and
a type determination step (S403) of determining the type of a data unit;
**characterized by**
an order assurance function control step of, if it is determined by the order determination step (S402) that the arrival order of a data unit is not correct, and it is determined by the type determination step (S403) that the type of the data unit is a particular type, disabling the order assurance function for the data unit of the particular type (S405).

## Patentansprüche

1. Datenweiterleitungsvorrichtung (300) zum Weiterleiten des Sendens/ Empfangens einer Dateneinheit in Übereinstimmung mit einem Kommunikationsprotokoll, das eine Reihenfolgengewährleistungsfunktion besitzt, wobei die Vorrichtung (300) umfasst:
Typbestimmungsmittel (305), um den Typ einer Dateneinheit zu bestimmen; und
Reihenfolgenbestimmungsmittel (304), um zu bestimmen, ob die Ankunftsreihenfolge einer Dateneinheit korrekt ist oder nicht;
**gekennzeichnet durch**
Reihenfolgengewährleistungsfunktion-Steuermittel (303), um die Reihenfolgengewährleistungsfunktion zu sperren; wobei
dann, wenn festgestellt wird, dass die Ankunftsreihenfolge einer Dateneinheit eines bestimmten Typs nicht korrekt ist, die Reihenfolgengewährleistungsfunktion-Steuermittel (303) anhand des Ergebnisses der Bestimmung **durch** die Reihenfolgenbestimmungsmittel (304) und die Typbestimmungsmittel (305) die Reihenfolgengewährleistungsfunktion für die Dateneinheit des bestimmten Typs sperren.

2. Datenweiterleitungsvorrichtung (300) nach Anspruch 1, wobei die Dateneinheit des bestimmten Typs eine Übermittlungsbestätigungsnachricht ist.

3. Datenweiterleitungsvorrichtung (300) nach Anspruch 1 oder 2, wobei
die Dateneinheit des bestimmten Typs eine Dateneinheit in Aufwärtsstreckenrichtung ist; und
die Kommunikation in dem Kommunikationsnetz in Übereinstimmung mit einem Kommunikationsprotokoll ausgeführt wird, in dem das Intervall des Sendens von Dateneinheiten in Abwärtsstreckenrichtung mit dem Intervall der Ankunft von Dateneinheiten in Aufwärtsstreckenrichtung synchronisiert ist.

4. Datenweiterleitungsvorrichtung (300) nach einem der Ansprüche 1 bis 3, wobei
die Reihenfolgengewährleistungsfunktion-Steuermittel (303) eine Dateneinheit eines bestimmten Typs, deren Ankunftsreihenfolge nicht korrekt ist, direkt senden, ohne die Dateneinheit zu akkumulieren.

5. Datenweiterleitungsverfahren zum Weiterleiten des Sendens/Empfangens einer Dateneinheit in Übereinstimmung mit einem Kommunikationsprotokoll, das eine Reihenfolgengewährleistungsfunktion besitzt, wobei das Verfahren umfasst:
einen Reihenfolgenbestimmungsschritt (S402) zum Bestimmen, ob die Ankunftsreihenfolge einer Dateneinheit korrekt ist oder nicht; und
einen Typbestimmungsschritt (S403) zum Bestimmen des Typs einer Dateneinheit;
**gekennzeichnet durch**
einen Reihenfolgengewährleistungsfunktion-Steuerschritt, in dem dann, wenn **durch** den Reihenfolgenbestimmungsschritt (S402) bestimmt wird, dass die Ankunftsreihenfolge einer Dateneinheit nicht korrekt ist, und wenn **durch** den Typbestimmungsschritt (S403) bestimmt wird, dass der Typ der Dateneinheit ein bestimmter Typ ist, die Reihenfolgengewährleistungsfunktion für die Dateneinheit des bestimmten Typs gesperrt wird (S405).

## Revendications

1. Dispositif (300) relais de données pour relayer envoyer/recevoir une unité de donnée selon un protocole de communication ayant une fonction d'assurance d'ordre, le dispositif (300) comprenant :
des moyens de détermination du type (305) pour déterminer le type d'unité de données ; et
des moyens de détermination d'ordre (304) pour déterminer si oui ou non l'ordre d'arrivée d'une unité de donnée est correct;
**caractérisé par**
des moyens de contrôle de la fonction d'assurance d'ordre (303) pour désactiver la fonction d'assurance d'ordre, dans lequel
s'il est déterminé, sur la base du résultat d'une détermination par les moyens de détermination d'ordre (304) et les moyens de détermination du type (305), que l'ordre d'arrivée d'une unité de donnée d'un type particulier n'est pas correct, les moyens de contrôle de la fonction d'assurance d'ordre (303) désactivent la fonction d'assurance d'ordre pour l'unité de donnée du type particulier.

2. Dispositif (300) relais de données selon la revendication 1, **caractérisé en ce que** l'unité de donnée du type particulier est un message d'accusé de livraison.

3. Dispositif (300) relais de données selon la revendication 1 ou 2, **caractérisé en ce** l'unité de donnée d'un type particulier est une unité de donnée montante ; et en ce que la communication est effectuée sur le réseau de communication selon un protocole de communication dans lequel, l'intervalle d'envoi d'unités de données descendantes est synchronisé avec l'intervalle d'arrivée d'unités de données montantes.

4. Dispositif (300) relais de données, selon l'une quelconque des revendications 1 à 3, **caractérisé en ce que** les moyens de contrôle de la fonction d'assurance d'ordre (303) transmettent immédiatement une unité de donnée d'un type particulier dont l'ordre d'arrivée n'est pas correct, sans accumuler l'unité de donnée.

5. Procédé de relais de données pour relayer envoyer/recevoir une unité de donnée selon un protocole de communication ayant une fonction d'assurance d'ordre, le procédé comprenant :
une étape de détermination d'ordre (S402) pour déterminer si oui ou non l'ordre d'arrivée d'une unité de donnée est correct; et
une étape de détermination du type (S403) pour déterminer le type d'unité de donnée ;
**caractérisé par**
une étape de contrôle de la fonction d'assurance d'ordre désactivant la fonction d'assurance d'ordre pour l'unité de donnée du type particulier (S405) s'il est déterminé à l'étape de détermination d'ordre (S402) que l'ordre d'arrivé d'une unité de donnée n'est pas correct, et qu'il est déterminer à l'étape de détermination (S403) que le type de l'unité de donnée est un type particulier.
